(19) Europäisches Patentamt
European Patent Office
Office européen des brevets

(11) Publication number : **0 560 854 B1**

# (12) EUROPEAN PATENT SPECIFICATION

(45) Date of publication of patent specification : **08.03.95 Bulletin 95/10**

(51) Int. Cl.$^6$ : **G03C 1/89**, C09D 101/10, C08B 3/12

(21) Application number : **92900483.6**

(22) Date of filing : **03.12.91**

(86) International application number : **PCT/US91/08852**

(87) International publication number : **WO 92/10787 25.06.92 Gazette 92/14**

## (54) CONDUCTIVE COATING COMPOSITION AND COMPOSITE BASES AND ELEMENTS CONTAINING SAME.

(30) Priority : **04.12.90 US 623149**

(43) Date of publication of application : **22.09.93 Bulletin 93/38**

(45) Publication of the grant of the patent : **08.03.95 Bulletin 95/10**

(84) Designated Contracting States : **DE FR GB**

(56) References cited :
**GB-A- 410 125**
**US-A- 2 104 849**
**US-A- 4 459 352**

(73) Proprietor : **EASTMAN KODAK COMPANY**
**343 State Street**
**Rochester, New York 14650-2201 (US)**

(72) Inventor : **JONES, Raymond, T.**
**958 Garden Lane**
**Webster, NY 14580 (US)**
Inventor : **HANNON, Charles, W.**
**88 Leander Road**
**Rochester, NY 14612 (US)**

(74) Representative : **Buff, Michel**
**Kodak-Pathé**
**Département des Brevets et Licences CRT**
**Centre de Recherches et de Technologie**
**Zone Industrielle**
**F-71102 Chalon sur Saône Cédex (FR)**

EP 0 560 854 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Technical Field

This invention relates to cellulose derivatives useful for forming conductive layers on supports. More specifically, this invention relates to coating compositions useful for providing water-insoluble, conductive, and highly-adherent layers on composite bases or elements. In particular, such compositions are useful for providing conductive subbing layers for adhering hydrophilic layers (e.g. photographic emulsion layers) to hydrophobic supports (e.g. polyester films). It also relates to composite bases and elements containing one or more layers formed from such coating compositions.

### Background Art

Hydrophobic substrates, such as polyester, cellulose triacetate, polyamide or polystyrene film bases and resin-coated paper supports, are well known commercial materials which possess a number of advantages for many uses. In the photographic industry, for example, such substrates are used as supports for various radiation-sensitive elements. However, the use of such hydrophobic materials in the photographic and other arts has been hampered to some extent because of the difficulty of suitably adhering various other layers to them, particularly when such other layers are hydrophilic in nature.

In order to improve adhesion of various layers to hydrophobic supports, it is known to apply one or more intermediate layers to the supports before other layers are applied; see for example, in U.S. Patent No. 4,123,278 (issued October 31, 1978 to Van Paesschen et al). Such intermediate layers are generally known as "subbing" layers and can include a wide variety of natural or synthetic resinous materials, adhesion promotors and the like.

During the manufacture of radiation-sensitive elements, but prior to applying radiation-sensitive or other hydrophilic layers to a subbed hydrophobic support, the support web itself is subjected to considerable mechanical handling over rollers and other web-guiding means. As a result, a considerable buildup in electrostatic charge occurs on the support web. Because of the insulative nature of the support material, little of this charge is dissipated by the time it reaches subsequent coating operations. Consequently, such electrostatic charge often accumulates and interferes with coating operations by causing nonuniformities, streaks and other defects in the applied coatings. Furthermore, during the coating of radiation-sensitive materials, the electrostatic charge often arcs or discharges, thereby "fogging" the radiation-sensitive layers. Fogging shows up as small white dots in any image provided in such layers.

Attempts have been made to prevent or reduce electrostatic charge buildup either by making the support conductive or by coating the support with conductive compositions as noted, for example, in U.S. Patent No. 1,981,425 (issued November 20, 1934 to McNally) and in the Van Paesschen et al patent mentioned hereinabove.

However, such attempts have had limited success. While reducing electrostatic charge buildup to some extent, known conductive layers generally exhibit limited conductivity thereby reducing such buildup to an insufficient degree. Other conductive layers exhibit inadequate adhesion to hydrophobic supports. In particular, it has been difficult for workers in the photographic art to find coating compositions which, when coated and dried, will prevent or reduce electrostatic charge buildup. It has also been difficult to find coating compositions for use in forming conductive layers which readily adhere to hydrophobic supports.

U.S. 4,459,352 describes a coating composition which when applied to a support and dried, overcomes aforementioned problems of coating compositions previously known in the art. More particularly, the coating composition of U.S. 4,459,352 can be used to provide a conductive layer which reduces or eliminates electrostatic charge build up which often occurs during manufacturing operations. Further, this subbing layer exhibits excellent adhesion to both hydrophobic support materials and subsequently coating hydrophilic layers. The coating compositions of U.S. 4,459,352 are also useful for providing water-insoluble and conductive pelloid layers on hydrophobic support materials. Pelloid layers ar also known as anti-curl layers.

Thus, in one embodiment, U.S. 4,459,352 provides an aqueous coating composition, which is capable of forming a water-insoluble conductive and highly-adherent layer on a support, said layer comprises (a) a hydrophilic binder; (b) an ester of cellulose having at least 8 acyl groups per $C_{24}$ cellulose unit wherein at least a majority of the acyl groups are derived from an aliphatic polycarboxylic acid having from 3 to 6 carbon atoms; or a salt of that ester; and optionally (c) a hardening agent in an amount sufficient to render the layer water-insoluble after coating and drying of the coating composition.

The instant invention provides an improvement of the invention described in U.S. 4,459,352. More particularly, it has been demonstrated that the way the ester of cellulose is formed has a profound effect on the suitability of the ester (or derivative thereof) for providing conductive, adherent layers. More specifically, it has been found that salts with improved conductivity can be made by (a) de-esterifying a cellulose ester, e.g. deacetylating cellulose acetate, (b) reacting the cellulose thereby obtained with an aliphatic polycarboxylic acid, and (c) thereafter forming a salt by reaction of the cellulose-polycarboxylic acid derivative with a base.

Research Disclosure, (December 1978) No. 176 discloses that cellulose acetate film or membranes can be saponified or deacetylated with aqueous alkaline solutions or methanolic sodium methylate solutions.

British 389,876 discloses that cellulose ester materials, e.g. yarns, threads and fabrics, can be saponified with ammonia gas at 100-150°C. so that by-product, e.g. acetamide, is produced and removed in the gaseous current as it is formed. If desired, the process can be conducted in the presence of materials which swell the cellulose ester, e.g. methyl or ethyl alcohol.

British 433,785 relates to the treatment of cellulose esters to make them more soluble in acetone. The process disclosed comprises treating the esters with an alcohol such as ethanol which swells but does not dissolve the ester, in the presence of a small amount of an esterifying catalyst e.g. phosphoric acid, or sulfuric acid.

U.S. 2,270,326 discloses preparing a reactive form of cellulose with sodium in anhydrous ammonia.

U.S. 3,950,822 discloses that cellulose triacetate can be deacetylated with minimal molecular weight degradation using sodium methoxide in methanol under a nitrogen atmosphere.

U.S. 4,543,221 discloses formation of cellulose ester gelled semipermeable hollow fibers by deacetylation in aqueous alkali solution.

U.S. 4,764,605 discloses deacetylating an acetyl derivative of a saccharide with an aqueous metal hydroxide/aqueous hydrogen peroxide/organic solvent to selectively hydrolyze specific acetate bonds.

Manley, J. of Polymer Science: Part A Vol. 1. pp. 1893-1899 (1963), discloses that when cellulose triacetate crystals are hydrolyzed in an aqueous medium, polycrystalline cellulose is formed. In contrast, use of a non-aqueous medium gives an amorphous cellulose.

Wadehra et al, J. of Applied Polymer Science Vol, 9, pp. 2627-2630 (1965), discloses amorphous cellulose is obtained by treating cellulose triacetate sheets with 1% sodium methylate in anhydrous methanol.

Jeffries, Journal of Applied Polymer Science 12, pp. 425-445 (1968) discloses the preparation of films and fibers from highly disordered cellulose by regeneration in non-aqueous media. Disordered cellulose produced from cellulose acetate contains about 3-5% ethanol that is very resistant to evacuation. Disordered celluloses also crystallize very rapidly in water.

Sisson, Industrial and Engineering Chemistry, Vol. 30, IV.5, pp. 530-537 (1938) teaches that amorphous cellulose is changed to a crystalline cellulose hydrate when the sample is treated with dilute acid or bleached.

## DISCLOSURE OF INVENTION

This invention relates to a novel material for preparing a conductive coating. The novel material is a cellulose ester having free carboxylic groups, or preferably a salt thereof, that is prepared from a cellulose composition produced by a certain method. Specifically, the method comprises removing carboxy groups from a cellulose ester (e.g. deacetylating a cellulose acetate) using an alkali metal alkoxide admixed with an alcohol as the decarboxylating agent. For example, the agent employed may be sodium methoxide in methanol. After preparation of the cellulose starting material in this manner, it is reacted with an aliphatic polycarboxylic acid having from 3 to 6 carbon atoms to prepare an ester of cellulose having at least 8 acyl groups per $C_{24}$ cellulose unit. Thereafter, it is preferred that the resultant ester intermediate be transformed into an alkali metal salt, e.g. a potassium salt, by reaction of free carboxyl groups with a base such as lithium, sodium, potassium and ammonium hydroxides and bicarbonates.

In accordance with this invention, conductive cellulose materials prepared as described above are incorporated into an aqueous coating composition comprising (i) water, (ii) the conductivity improving agent, and (iii) a hydrophilic binder such as gelatin, and optionally other ingredients such as a hardener, surfactant, coating aid or the like. Such coating compositions are part of this invention.

The coating compositions of this invention are useful for providing conductive layers on materials such as silver halide-based photographic elements, e.g. film. Thus, they may be used to provide a conductive coating to a support such as polyester or cellulose acetate, to prepare a composite base having a conductive layer on one or both sides of the support. To prepare such a composite layer, the coating composition of this invention is applied to the support by a suitable coating technique, and dried.

The composite base can be used to prepare a composite element comprising a support, and a hydrophylic layer, on at least one side thereof. The hydrophylic layer is adhered to the support with a conductive layer of this invention.

This invention provides many benefits and overcomes difficulties and shortcomings in the prior art. For

example, the method employed for forming the cellulose starting material provides good control of the molecular weight of the cellulose-containing conductive material. Secondly, compared to the use of aqueous ammonium hydroxide as a decarboxylating agent, the use of a solution of sodium methoxide in methanol provides reduced process time and a more reactive cellulose. Since the cellulose is more reactive, it can be reacted with the polycarboxylic acid much faster. This provides lessened cellulose degradation. The solution viscosities of aqueous coating compositions of this invention are excellent, and the improved viscosity of the solutions afford better conductive coats and decrease product waste due to poor coats. Furthermore, the coatings provided by this invention have much improved conductivity and therefore provide lower resistivity. The increased conductivity enables less material to be used, thereby improving product production costs.

For all the above reasons, the instant invention is readily adaptable by industry, and considered to be a significant advance in the art.

## BEST MODE FOR CARRYING OUT THE INVENTION

The coating composition of this invention is an aqueous-based composition. Typically, water is the only solvent in the composition. However, mixtures of water and water-miscible organic solvents (e.g. alcohols such as methanol and isopropanol, and ketones such as acetone) can be used as long as water comprises at least 50 percent, by weight, of the mixture.

The first essential component of the coating composition of this invention is one or more hydrophilic binders. Typically, such binders are film-forming and water-soluble. They are either commercially available or readily prepared using methods known to workers skilled in the art. Suitable hydrophilic binders include both naturally occurring substances such as proteins and protein derivatives, cellulose derivatives (e.g. cellulose esters and cellulose nitrate), gelatin and gelatin derivatives, polysaccharides, collagen derivatives; and synthetic hydrophilic polymeric materials such as poly(vinyl alcohol), poly(vinyl acetate)s and the like. Other examples of useful hydrophilic binders known in the art are described, for example, in Research Disclosure, publication 17643, December, 1978, p. 26, paragraph IX (published by Industrial Opportunities, Ltd., Homewell, Havant Hampshire PO9 1EF United Kingdom). A binder particularly useful in the practice of this invention is gelatin.

The second essential component of the coating compositions of this invention is one or more of certain esters of cellulose, or water-soluble salts of such esters. These esters or salts have at least 8 acyl groups per $C_{24}$ cellulose unit wherein at least a majority of the acyl groups are derived from an aliphatic polycarboxylic acid having from 3 to 6 carbon atoms. The esters useful in the practice of this invention can be represented by the following formula of a $C_{24}$ cellulose unit:

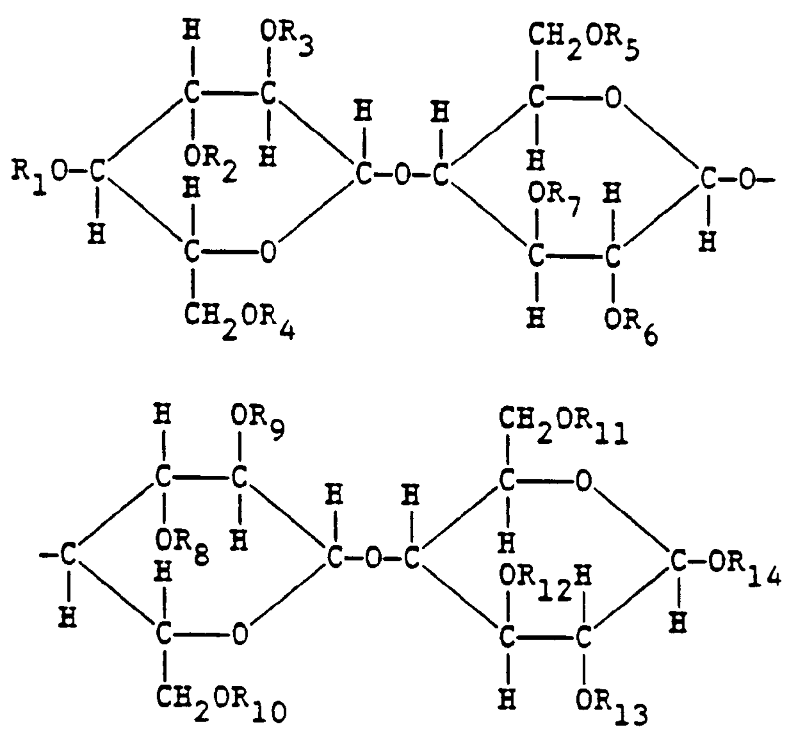

wherein each of $R_1$-$R_{14}$ is independently hydrogen or an acyl group. The term "acyl group" is used in this specification and in the following claims to refer to an organic radical derived from an organic acid by removal of the hydroxyl group (i.e. $R_1CO$- wherein $R_1$ is a hydrocarbon moiety). At least 8, and preferably, at least 10 of $R_1$-$R_{14}$ are acyl groups. Of those acyl groups, at least a majority (i.e. greater than 50 percent), preferably, at least about two-thirds, and most preferably, all of them are derived from one or more suitable aliphatic polycarboxylic acids, which are described in detail hereinbelow.

Useful polycarboxylic acids (or acid halides or anhydride equivalents) for preparing the described esters include both aliphatic saturated and aliphatic unsaturated polycarboxylic acids having at least two carboxyl groups. Preferably, aliphatic saturated acids having only two carboxyl groups (i.e. dicarboxylic acids) are used. Examples of useful polycarboxylic acids include phthalic acid, terephthalic acid, trimellitic acid, malonic acid, succinic acid, glutaric acid, fumaric acid, glutaconic acid, 2-methylsuccinic acid, adipic acid, 1,2,3-propanetricarboxylic acid, and the like. Preferred acids include dicarboxylic acids having from 3 to 6 carbon atoms, such as succinic acid, malonic acid, and glutaric acid. A particularly useful polycarboxylic acid is succinic acid.

Mixtures of the described esters or salts thereof can be used in the coating compositions of this invention, if desired. Preferably, one or more salts of such esters are used. Such salts include the ammonium or alkali metal (e.g. lithium, sodium, potassium, etc.) salts. The sodium and potassium salts are particularly useful.

The improved conductive coatings of this invention can be used in two general ways. First, they can be used to reduce or prevent electrostatic charge build up during manufacture of the composite element, e.g. photographic film. When used for this purpose, it is not necessary to render the conductive layer of this invention water insoluble. In other words, useful coatings of this invention can be made by merely drying the conductive layer deposited on the support, after coating the support with an aqueous coating composition of the invention. When used in this manner, the coating compositions need not contain a hardener. The second general way of using the coating compositions is to provide protection against electrostatic build up during and after manufacture of the composite element. When used in this manner, the conductivity layers of this invention are rendered water insoluble by use of a hardener.

Rendering our coating compositions water insoluble with a hardener can be accomplished in either of two ways:

(1) by including a suitable hardening agent in the aqueous coating composition itself in an amount sufficient to render the composition water-insoluble after coating and drying of the composition; or (2) by incorporating a suitable diffusible hardening agent which is capable of rendering the composition water-insoluble at any appropriate place in the composite base or element. For example, a diffusible hardening agent can be incorporated in a hydrophilic coating composition which is coated "in association with" the coated conductive layer. As used in this specification "in association with" refers both to layers which are contiguous and to layers which have intervening layers there-between through which the diffusible hardening agent can diffuse to reach the conductive layer. Preferably, when a diffusible hardening agent is used in the practice of this invention, it is incorporated in a layer contiguous to the conductive layer so that diffusion of the hardening agent is expedited.

In a preferred embodiment of this invention, the hardening agent is included in the aqueous coating composition with the cellulose ester or salt thereof. The hardening agent can also be used to harden the hydrophilic binder in the composition, if necessary, as when gelatin is used as the binder.

Useful hardening agents, both diffusible and nondiffusible are well within the skill of an ordinary worker in the photographic art. Many of them are commercially available. Others can be readily prepared. They can be used alone or in mixtures, and in a free or blocked form.

Useful hardeners include Werner chromium complex compounds, chromium halides and sulfates, aldehydes, epoxy-containing compounds, haloethylsulfonyls, bis(-vinylsulfonyl)s, zirconium nitrate and others described, for example, in Research Disclosure, December, 1989, 308119, paragraph 10, pages 1004-1005. Preferred hardeners for use in this invention include diepoxides, such as butanediol diglycidyl ether.

The proportions of the components making up the coating compositions of this invention can be varied widely to meet the requirements of conductivity, adhesion and water-insolubility for a given use. Typically, the hydrophilic binder in the aqueous coating composition is present in an amount in the range of from about 20 to about 50, and preferably from about 35 to about 50, percent based on total dry composition weight. Further, the ester of cellulose or salt thereof is generally present in an amount in the range of from about 50 to about 80, percent based on total dry composition weight. The hardening agent is typically present in the aqueous coating compositions in an amount in the range of from about 10 to about 30, and preferably from about 15 to about 20, percent based on total dry composition weight. When a diffusible hardening agent is incorporated in another location in the composite base element, additional amounts may be needed so that a sufficient amount diffuses to the coating conductive layer to render it water-insoluble.

The coating compositions of this invention can include additional nonessential ingredients in amounts

which are typically used in the art. For example, they can contain matting agents (e.g. silica, starch, titanium dioxide, polymeric beads, zinc oxide and calcium carbonate), coating aids (e.g. alcohols and surfactants), biocides, wetting aids, dyes, defoamers, thickeners, colorants, and other addenda commonly employed in such compositions.

Typically the percentage solids in the aqueous coating compositions of this invention is in the range of from about 0.5 to about 15 percent based on total wet composition weight depending upon the use of the coating composition. For example, if it is used to provide a conductive subbing layer, the percent solids typically ranges from about 0.5 to about 2.5 percent. If the use intended is as pelloid or backing layer, the percent solids typically ranges from about 5 to about 15 percent.

The coating compositions of this invention can be applied to a suitable support material to form a conductive layer in the preparation of a composite base or composite element. Typical support materials include subbed or unsubbed polymeric films, wood fiber or cellulosic substances (e.g. paper), metallic sheets and foil, glass and ceramic substances. Typical of useful cellulosic supports are paper supports having a baryta or resin (e.g. polyolefinic) coating thereon.

Preferably, the support is a hydrophobic material, such as a resin-coated paper or a polymeric film. By "hydrophobic" is meant that the supports have a high or strong tendency to repel water. This hydrophobicity can be conveniently determined by measuring the receding water contact angle, $\theta_R$, established between a droplet of distilled water and the surface of the support. Methods for determining $\theta_R$ are well known. A suitable method is the Sessile drop method described in Physical Chemistry of Surfaces, by A. W. Adamson (published by Interscience Publishing Corp., 1967, pp. 352-375). Although it can be lower, typically, the $\theta_R$ for supports used in the practice of this invention, as determined by the Sessile drop method, is greater than about 75°, and preferably greater than about 90°.

Typically useful polymeric film supports include cellulose nitrate; cellulose esters (e.g. cellulose triacetate); polystyrene; polyamides; polymers prepared from vinyl chloride; polyolefins (e.g. polyethylene); polycarbonates; polyacrylates; polysulfones; polyamides and polyesters of dibasic aromatic carboxylic acids with divalent alcohols. A particularly useful polymeric support is a poly(ethylene terephthalate) film.

A more detailed description of useful supports and methods of making same is provided in Research Disclosure, publication 308,119, paragraph XVII, cited previously herein and the references mentioned therein.

The aqueous coating composition of this invention can be applied to one or both sides of the support, but preferably to both sides, to form an electrically conductive layer. The composition can be applied or located on the supports by any of a number of suitable procedures, including immersion or dip coating, roller coating, reverse roll coating, air knife coating, doctor blade coating, gravure coating, spray coating, extrusion coating, bead coating, stretch-flow coating, skim-pan air knife coating, and curtain coating. The composition can be applied alone or as one of several layers applied with multilayer coating techniques. Applied layers can be dried by any suitable evaporation technique. Descriptions of coating and drying techniques are given in Research Disclosure, publication 308,119, paragraph XV, cited hereinabove and the references mentioned therein. The thickness of the coated conductive layer will depend upon the particular requirements of the composite base or element involved and is well within the skill of an ordinary worker in the photographic coating art. The conductive layer can be formed with one or more coating passes to obtain desired coverages. Drying of the coated layer(s) can be carried out over a wide range of temperatures as is known in the art.

The coated and dried conductive layer typically has a surface resistivity of less than about $10^{10}$ ohms per square, and preferably from about $10^8$ to about $10^9$ ohms per square, all measured at 21°C. and 50% relative humidity. This resistivity can be measured by any suitable technique. One such technique is described in ASTM Standard C59.3, designation D257-75 entitled "Standard Methods of Test for D-C Resistance or Conductance of Insulating Materials, " pp. 66-85, published Feb. 29, 1975. U.S. Pat. No. 3,525,621 (issued Aug. 25, 1970 to Miller) also discusses measurement of surface resistivities of coated layers.

The composite bases of this invention can be used for any number of products which require a substrate having one or more conductive layers thereon. One such use is for preparing composite elements which additionally carry one or more additional layers which may not adhere adequately to hydrophobic supports. Typically, such additional layers are hydrophilic in nature. By "hydrophilic" is meant that the layers have a strong tendency to attract water. As with the hydrophobic supports described hereinabove, the hydrophilicity of such layers can be determined by measuring the $\theta_R$ by the Sessile drop method.

Typical hydrophilic layers contained in the composite elements include subbing layers, antihalation layers, antistatic layers, matting layers, reflective layers, timing layers, neutralizing layers, protective layers and the like as are commonly used in the photographic art. Such hydrophilic layers would also include hydrophilic image-forming and image-bearing layers useful in the printing, electrographic (e.g. electrophotographic), photographic and other imaging arts. The hydrophilic layers typically contain one or more hydrophilic binders (referred to in this specification and in the claims as "second hydrophilic binder") which can be the same or different from what is described in the element claims as the "first" hydrophilic binders used in the aqueous coating compositions of this invention. Preferably, the first and second hydrophilic binders are the same. For example, preferably both are gelatin.

In one embodiment of this invention, the composite elements are useful as image-forming elements which typically comprise one or more image-forming layers containing components capable of providing an image under certain conditions, e.g. in repsonse to electromagnetic radiation, heat, electricity or chemical treatment. Typical image-forming compounds are described, for example, in Research Disclosure, publications 10938 (May, 1973); 15162 (November, 1976); 17029 (June, 1978); and 17643 (December, 1978).

In another embodiment of this invention, the composite elements are useful as image-receiving elements which comprise one or more image-receiving layers containing components capable of "receiving" an image. Such elements can be used as receivers in for example, integral image transfer film units or two-sheet instant film products, including those sometimes called "peel apart" products and those described in U.S. Patent Nos. 4,296,195 (issued October 20, 1981 to Bishop et al) and 4,297,432 (issued October 27, 1981 to Bowman et al). They can also be photoconductive elements designed to receive toned images.

In a preferred embodiment of this invention, a radiation-sensitive element comprises a suitable support (e.g. a resin-coated paper or polyester film). To this support, one or more radiation-sensitive layers are adhered with a conductive subbing layer composed of the hydrophilic binder, cellulose ester (or salt thereof) and hardener described herein. Preferably, the hardening agent is provided in the aqueous coating compositions which is applied and dried, but if diffusible, it can be incorporated in another appropriate place in the element if desired.

Such radiation-sensitive elements include elements intended for use in both black-and-white and color photography, such as photothermographic, photographic, thermographic and radiographic elements, diffusion or image transfer film units and the like. Examples of photographic elements include photographic papers, aerial films, micrographic films and graphic arts films. The characteristics, components and methods of making such elements are known in the art. One reference summarizing much of the art is Research Disclosure, Publication 368,119 cited previously hereinabove.

In another preferred embodiment of this invention, the aqueous coating composition of this invention is coated on a suitable support and dried to be used as a conductive pelloid layer. This pelloid layer could provide both antistatic and anti-curl characteristics to the resulting composite base or element. It is located on the side of the support opposite to that side on which any image-forming or image-receiving layers are applied. Such conductive pelloid layers also typically contain a matting agent, such as silica. Between the pelloid layer and the support can be one or more intervening layers if desired.

The radiation-sensitive layers useful in the practice of this invention can contain any suitable radiation-sensitive material. Preferably, they are photographic emulsion layers which contain one or more of the conventional photographic silver halides. Such materials include, for example, silver chloride, silver bromide, silver bromoiodide, silver chlorobromide, silver chloroiodide, silver chlorobromoiodide, and mixtures thereof. Typically, these emulsion layers also contain one or more hydrophilic binders. Illustrative examples of such binders are proteins such as gelatin, protein derivatives, cellulose derivatives, polysaccharides such as starch, sugars such as dextran, plant gums, and synthetic polymers such a polyvinyl alcohol, polyacrylamide and polyvinylpyrrolidone. Conventional addenda such as antifoggants, stabilizers, sensitizers, development modifiers, developing agents, hardeners, plasticizers, coating aids, etc. can also be included in the radiation-sensitive layers.

In addition to the conductive and radiation-sensitive layers described hereinabove, the elements of this invention can include other appropriate subbing, pelloid, protective, adhesive, filter, reflective, opacifying, antistatic, intermediate and other layers commonly incorporated in radiation-sensitive products.

The hydrophilic (e.g. radiation-sensitive) layers, and other optional layers, in the elements of this invention can be applied to a support or composite base in any suitable manner, including those well known techniques described hereinabove for applying the aqueous coating compositions of this invention. The hydrophilic layers can be bonded directly to the support with the described conductive layer or if desired, there can be one or more intervening layers either between the support and the conductive layer, or between the conductive layer and the hydrophilic layer. Preferably, the hydrophilic layer is bonded directly to the support with the conductive layer.

In an embodiment of this invention, a photographic element comprises a polyester support having on at least one side thereof, one or more photosensitive silver halide emulsion layers. These emulsion layers are adhered to the support with a conductive and highly-adherent subbing layer formed from an aqueous coating composition comprising: gelatin; potassium cellulose succinate; and butanediol diglycidyl ether hardener in an amount sufficient to render said potassium cellulose succinate water-insoluble after coating and drying of the coating composition.

Better results are obtained if the molecular weight of the cellulose ester in the coating composition is controlled, at least to some extent. Generally speaking, the preferred molecular weight range of the conductive material is dependent to at least some extent on the coating technique employed to prepare the conductive coating of this invention, and the particular apparatus employed when carrying out the selected technique.

Thus, for example, when using a skim pan-air knife coating technique, it has been found that good results are obtained if the coating composition is prepared, using the technique described herein, from a cellulose having a degree of polymerization of from about 75 to about 130, i.e. a weight average molecular weight of from about 12,150 to about 21,060. Such a cellulose can be obtained, for example, by decarboxylating a cellulose ester of a monocarboxylic acid, e.g. a lower fatty acid having 2-6 carbon atoms. Preferably, the cellulose fatty acid ester is cellulose acetate having 2 or 3 acetyl units per $C_6$ cellulose unit. More preferably, there is on average, about 2.5 acetyl groups per each $C_6$ cellulose unit. For a cellulose acetate having a degree of polymerization of 75-200 (i.e. from 75 to 200 $C_6H_{10}O_5$ units) the weight average molecular weight of such a material is from about 20,000 to about 50,000.

Above, it was mentioned that coating can be made from coating compositions of this invention using a skim pan-air knife coating system. Skim pan-air knife coating is accomplished by transporting a web to be coated under a roller, and raising a pan of coating solution up to the level at which the solution is just touching the support for application. A coating solution feed system (usually gravity activated) maintains a constant coating solution level in the pan. The amount of coating solution applied in this manner is controlled by the viscosity and percent solids of the coating solution. Coverage can also be varied by increasing or decreasing the air pressure on the air knife which blows excess coating solution off the support and back into the pan. An air knife is an air manifold.

The cellulose used as a starting material (to prepare the conductive agent of this invention) is prepared by decarboxylating a cellulose ester of a fatty acid, such as described above, in a non-aqueous medium. Preferred non-aqueous media are lower alkanols $C_nH_{2n+1}OH$, wherein n is from 1 to about 3. Preferred alcohols are methanol and ethanol.

These alcohols are used as the deacylating agent, and an excess is employed to provide a non-aqueous reaction medium which facilitates the contacting of reactants and catalyst.

The decarboxylating agent used to prepare cellulose from its fatty acid ester is employed in the presence of a catalyst, e.g. an alkali metal alkoxide, preferably a sodium or potassium alkoxide of an alcohol described above.

Sodium alkoxides are preferred. It is preferred that the alkoxide be derived from the alcohol that is used as a reaction medium. Thus highly preferred decarboxylation agents are sodium methoxide/methanol mixtures, and sodium ethoxide/ethanol mixtures. The concentration of the alkoxide is not critical; however, up to a point, the concentration of alkoxide will have an effect on the reaction rate. Preferred concentrations are in the range of from about 0.05 to about 0.5 weight percent.

It is important to be sure of the purity of the sodium methoxide. If it is exposed to air it will pick up water and carbon dioxide, yielding sodium hydroxide, sodium carbonate and bicarbonate. The carbonates are inactive. While the sodium hydroxide will deacetylate cellulose acetate, it is not a catalyst since it is consumed in the reaction, forming sodium acetate. Impure material can be used as long as the required amount of methoxide is present.

When such decarboxylating agents are employed, it is preferred that they be employed at a temperature in the range of from about 50° to about 80°C; more preferably from about 65 to about 78.5°C. Reflux temperatures are conveniently used. It is preferred that the decarboxylation reaction be conducted for a time of from about 2 to about 10 hours, more preferably from about 3 to about 6 hours. Although not critical, it is preferred that the decarboxylation reaction be conducted while agitating the reaction mixture, for example, by stirring.

Cellulose prepared in this manner can be dried, and stored as a dry powder. When the cellulose is dried, it is preferred that the drying temperature not exceed about 40°C for a substantial period of time; otherwise there may be a decrease in reactivity. Drying is preferably conducted under reduced pressures to decrease the amount of time to reach a desired volatiles content. For example, a pressure of 25mm Hg can be used. Such a pressure and a drying temperature of 40°C has been used to prepare a cellulose having a volatiles content of less than 3% in 24 hours.

Cellulose prepared in the above manner is preferentially used soon after preparation. If stored in a cold room (2°C), it should be used within 90 days.

Cellulose prepared in the manner described above can be reacted with a polycarboxylic acid (or acid halide or anhydride equivalent) according to the skill in the art. Preferably, the process is conducted in the presence of a solvent for the polycarboxylic acid or equivalent, e.g. a liquid fatty acid such as glacial acetic acid, and an esterification catalyst such as an alkali metal salt of an acid, e.g. potassium acetate.

The esterification reaction is preferably conducted under conditions in which reaction of more than one

carboxyl group in the polycarboxylic acid or equivalent is kept low, so as to retard the formation of product having an elevated viscosity. Thus, the reaction is conducted under such conditions of time and temperature as to maximize the formation of an ester product having one carboxy function of the polycarboxylic acid reacted with cellulose, and minimize the formation of product in which more than one carboxy group, per molecule of polycarboxylic acid, is esterfied with cellulose. When the reaction is conducted in this way, good viscosity control is realized, and the product has improved conductivity.

It has been found that good results are obtained in the reaction of succinic acid and cellulose if the reaction of the process is conducted at 65°-85°C for from 1 to 24 hours. Analogous times and temperatures can be used when other polycarboxylic acid (or equivalent) reactants are substituted for succinic acid.

In a preferred embodiment, the cellulose ester of polycarboxylic acid, prepared as described above, is not used per se to form a coating composition of this invention. Instead, such esters are converted into salts, preferably sodium or potassium salts, or mixtures thereof. Salts are conveniently prepared by reacting the ester intermediate with the amount of metal hydroxide or bicarbonate calculated to react with the carboxylic acid functions not bonded to cellulose ("stoichiometric amount"). The reaction is preferably conducted while stirring or otherwise agitating the reactants to promote good mixing. It is not critical to use the stoichiometric amount of salt forming reactant, but convenient to do so.

If less than the stoichiometric amount is used, then the product will have lessened conductivity, if more than stoichiometric is used, product isolation is complicated and there may be a deleterious effect on composites formed therefrom.

Preparative Example 1

Deacylation of Cellulose Using Sodium Methoxide in Methanol.

In a 5 liter 3 neck flask equipped with stirrer and reflux condenser, were placed 500 grams of cellulose acetate, 1500 grams of methanol and 30 grams of a 25% solution of sodium methoxide in methanol. The flask is heated in a 72°C constant temperature bath and the contents refluxed with vigorous stirring for 4 hours. After 4 hours, the contents are cooled, filtered, washed with 2 x 200 grams of methanol and dried for 16 hours at 40°C under vacuum. Analysis shows less than 2% of the acetyl groups remaining.

The ester of polycarboxylic acid can be prepared in general accordance with the procedure discussed above and illustrated by the Comparative Example.

However, there are decided advantages obtained in using the cellulose prepared by reacting cellulose acetate with an alcohol, such as methanol, in the presence of a catalyst such as sodium methoxide. For example, using the latter method and a reflux temperature of 64°C (methanol) the deacetylation reaction can be conducted in about 4 hours. This is in contrast to the approximately 48 hours required to react aqueous ammonia with cellulose acetate at 25°C. Furthermore, the product obtained from $NaOCH_3/CH_3OH$ is in acceptable form after only one methanol rinse, whereas the product obtained from aqueous ammonia is rinsed three times with water and three times with glacial acetic acid. That product is stored while wet with acetic acid, while an alcohol/alkoxide product can be stored dry.

In the following Examples and Tables, "DACA" is used to mean "deacetylated cellulose acetate". Likewise "DACA-1" is used to signify a DACA made by conducting the deacetylation with aqueous ammonia hydroxide. Furthermore, "DACA-2" is used to signify a deacylated cellulose acetate made by conducting the deacylation with methanol in the presence of sodium methoxide.

Example 2

Preparation of a Deacetylated Cellulose Acetate:

To a stirred and heated reactor equipped with a reflux condenser, add 5 parts by weight methanol. Add 1.66 parts Eastman grade CA398-3 cellulose acetate (number average molecular weight is 27,000). Add 0.1 part sodium methoxide. Heat to about 65°C and reflux for 4 hours. Cool to 20°C. Isolate the slurry of cellulose on a buchner funnel or filtering centrifuge. Rinse the filter cake with 2.2 parts of fresh methanol. Dry at 40°C under vacuum. The yield is 1 part DACA-2 by weight. Volatiles are less than 3%. Residual acetyl content is less than 3% by weight. Inherent viscosity in iron sodium tartrate solution is between 0.9 and 1.2 dL/g (measured at 0.5% weight per volume).

Example 3

Preparation of Trihydrogen Cellulose Trisuccinate (HCS):

To a dry, heated and stirred reactor, add 4.3 parts by weight glacial acetic acid. Add 0.97 parts succinic anhydride. Add 0.35 parts DACA-2 prepared as in Example 2. Add 0.54 parts potassium acetate. Heat the slurry to 85°C and hold for 8 hours. During the first 30 minutes the viscosity will increase sharply, but within 45 minutes the substitution will have proceeded far enough that the HCS will begin to dissolve in the acetic acid and viscosity will diminish. To the still hot reactor after 8 hours, add 1.23 parts demineralized water and then cool reactor to 20°C. Precipitate the polymer dope in 44 parts cold water containing 0.027 parts sodium hypochlorite and 0.11 parts of 36% hydrochloric acid. Using decantation washes, the HCS is washed 5 times with 44 parts of demineralized water in each wash. The HCS is isolated on a buchner funnel or filtering centrifuge and dried at 40°C under vacuum. The theoretical yield is one part HCS at 3 out of a possible 3 succinyl substitutions on each glucose repeating unit. Volatiles are less than 2%. Residual succinic acid is less than 1% by weight. Succinyl substitution is at least 57.7% by weight (2.16 moles out of a possible 3) and is typically 63% (2.7 moles out of 3). Inherent viscosity in 1N sodium acetate in acetic acid is 0.7 to 1.0 dL/g (0.5% weight per volume).

When a cellulose having an appreciably higher molecular weight, e.g. about 30,000 is employed, one preferably uses a reaction vessel with high torque stirring sufficient to agitate the viscous reaction mixture containg the cellulose.

Example 4

Preparation of Tripotassium Cellulose Trisuccinate (KCS):

To a stirred and cooled tank, add 5.9 parts by weight of demineralized water. Add 1 part dry HCS. Over 2 hours, meter 13.4 parts of a 2.7% by weight potassium hydroxide solution in water into the HCS slurry. Keep the HCS temperature below 30°C. The major portion of dissolution and reaction to KCS will have occurred by the end of the potassium hydroxide addition. Stir the solution overnight to complete the reaction. Adjust the pH to between 6.6 and 7.2 with potassium hydroxide. Filter the solution through a 50 micron filter. Solids will be between 5.5% and 6.5% by weight. The solution viscosity at 25°C and 5.5% solids is between 5 and 25 centipoise.

Comparative Example

Deacetylation of Cellulose Acetate Using Ammonium Hydroxide and Subsequent Preparation of HCS and KCS

A mixture is prepared using 100g of cellulose acetate having a degree of polymerization of 75-130, and a number average molecular weight of 20,000 to 35,000; 500g of $H_2O$, and 500g of concentrated aqueous ammonia. The mixture is allowed to stand for 48 hours and then washed three times with 2000 g of $H_2O$ and then dewatered three times using 500 g of glacial acetic acid. The deacetylated cellulose acetate is at a concentration of about 26% in acetic acid.

Deacetylated product (164g) prepared as above, is introduced with 175g of succinic anhydride, 583.5g of glacial acetic acid and 65g of potassium acetate catalyst into a 2000 ml, 3-neck flask equipped with a stirrer, reflux condenser and a thermometer. The resultant mixture (28.6% solids) is reacted for 20 hours at 92% C. The succinic acid half ester of cellulose product thereby produced is recovered by precipitation in water. The product is then water washed and dried at 65°C.

The succinic acid ester product prepared as above is converted into a potassium salt as follows: 10.5g of the cellulose succinate is slurried in 63g of $H_2O$ and stirred rapidly. While stirring 136.5g of 0.5 N KOH is added slowly.

Following the general procedure given above, a sample of potassium cellulose succinate was prepared using as a starting material a cellulose acetate having a degree of polymerization of 100 and a weight average molecular weight of 27,000. The sample was used as the comparison material in the tests reported below.

Differences in HCS and KCS when using the preferred (nonaqueous) DACA-2 instead of the (aqueous) DACA-1;

In the HCS reaction, the use of DACA-2 made by a non-aqueous route allows a 48% reduction in the amount of succinic anhydride required. A 7°C (92°C to 85°C) reduction in reaction temperature and a 12 hour (20 to 8) reduction in reaction time is realized. The reaction mass is easily stirred throughout the reaction compared to the extremely difficult to stir reaction with DACA-1. Aqueous prepared DACA-1 will not react to completion using the HCS recipe described in Example 3. The final HCS from DACA-2 has a lower inherent viscosity compared to HCS from aqueous DACA, and it is completely soluble in 80°C water which HCS from aqueous DACA is not. The color of the HCS is significantly improved.

When starting with DACA-2, the dissolution of the KCS is faster and much more complete with an easy filtration of the final solution. The final KCS solution viscosity is about 20 centipoise compared to about 70 centipoise for KCS made from aqueous DACA.

Comparative Results

Three batches of KCS made from DACA-2 were obtained. Using the DACA-1 procedure, (see Comparative Example) two batches of KCS were made. The percent solids and viscosity of each batch were measured. Using each batch of KCS in a statistically designed experiment, KCS/gel formulations were made at varying ratios and coated at different coverages with wire wound rods on ESTAR polyester film support and dried at 260°F. Randomized coatings were made with the center point formula coated four times. The surface resistivity of each coating was measured at 50% RH.

Results and Discussion

Table 1 lists the % solids and viscosities of the five batches of KCS that were investigated. The data show that one batch (Batch 2) has a lower % solids (5.2 vs 6) and, hence, has the lowest viscosity. The data also show that the KCS made from DACA-2 have lower viscosities than the KCS made from DACA-1 which is advantageous in coating from a skim pan-air knife hopper. The lower reactivity of the DACA-1 requires a longer esterification time, hence, the more possibility for transesterification and higher solution viscosity.

Table 2 lists the surface resistivities of the coatings of the five batches of KCS at 50% RH in ohms/sq. x 10 exp 10. Excellent reproducibility of the resistivity values is seen in the center point formula (1:1 KCS/gel). The data also show the higher the KCS/gel ratio or the higher total coverage the lower the surface resistivity. The key point in the resistivity data is the 1 to 1.5 decade increase in conductivity of the KCS/gel coatings made from the DACA-2 synthesis versus the DACA-1 synthesis.

The lower viscosity and increased conductivity of KCS made by the DACA-2 synthesis allows reduction of the KCS/gel ratio from 4/1 to 1/1, thereby reducing the cost of a subbing layer while maintaining excellent coatability and a surface resistivity well within the specifications of 10 exp 8 to 10 exp 10 ohms/sq. at 50% RH.

TABLE 1

KCS Solutions made from

| | | DACA 2 | | DACA 1 | DACA 1 |
|---|---|---|---|---|---|
| Batch: | 1 | 2 | 3 | A | B |
| % Solids | 6.2 | 5.2 | 5.9 | 6.1 | 6.2 |
| Viscosity cps | 22.6 | 12.1 | 17.4 | 76.6 | 33.3 |

TABLE_2

DACA_1_vs._DACA_2_KCS_Resistivity

Rs_50%_RH_ohms/sq_x_10_exp_10

| KCS/Gel | Coverage mg/sq.ft. | | | | | | |
|---|---|---|---|---|---|---|---|
| Ratio | Total | KCS | Gel | Batch_1 | Batch_2 | Batch_3 | Batch_A/B |
| 1.50:1 | 12.0 | 4.80 | 7.20 | 0.02 | 0.03 | 0.007 | 0.08/0.03 |
| 1.50:1 | 4.0 | 1.60 | 2.40 | 0.02 | 0.07 | 0.50 | 0.50/0.60 |
| 0.50:1 | 12.0 | 8.00 | 4.00 | 11.0 | 3.30 | 2.30 | 80.6/18.2 |
| 0.50:1 | 4.0 | 2.67 | 1.33 | 7.50 | 35.7 | 56.0 | 122/1.6 |
| 1.00:1 | 8.0 | 4.00 | 4.00 | 0.30 | 0.10 | 0.07 | 15.2/19.2 |
| 1.00:1 | 8.0 | 4.00 | 4.00 | 0.20 | 0.10 | 0.90 | 8.9/7.5 |
| 1.00 | 8.0 | 4.00 | 4.00 | 0.10 | 0.20 | 0.50 | 9.8/5.6 |
| 1.00 | 8.0 | 4.00 | 4.00 | 0.50 | 0.20 | 0.03 | 35.7/6.0 |
| 1.71:1 | 8.0 | 2.96 | 5.04 | 0.03 | 0.03 | 0.04 | 0.23/1.1 |
| 1.29:1 | 8.0 | 6.19 | 1.81 | 269.0 | 21.7 | 170.0 | 1000/22.7 |
| 1.00:1 | 13.7 | 6.83 | 6.83 | 0.10 | 0.02 | 0.01 | 0.6/0.6 |
| 1.00:1 | 2.3 | 1.17 | 1.17 | 0.30 | 2.30 | 0.90 | 125/200 |
| 1.00:1 | 9.0 | 4.50 | 4.50 | 0.20 | 0.10 | 1.3 | 1.2/1.6 |
| 1.0:1 | 7.0 | 3.50 | 3.50 | 0.20 | 0.20 | 1.4 | 12.4/2.5 |
| 1.25:1 | 8.0 | 3.56 | 4.44 | 0.20 | 0.03 | 0.30 | 6.3/3.6 |
| 0.75:1 | 8.0 | 4.57 | 3.43 | 2.0 | 1.3 | 0.40 | 67/32 |

The invention has been described and illustrated above with particular reference to preferred embodiments. A skilled practitioner, familiar with Applicants' detailed description can make many substitutions or modifications without departing from the spirit of the appended claims which appear below.

## Claims

1. An aqueous coating composition which is capable of forming a conductive and highly-adherent layer on a support, said coating composition comprising:
   (a) a hydrophilic binder;
   (b) an ester of cellulose having at least 8 acyl groups per $C_{24}$ cellulose unit wherein at least a majority of said acyl groups are derived from an aliphatic polycarboxylic acid having from 3 to 6 carbon atoms; or a salt of said ester, said cellulose characterized by having been derived, prior to preparation of said ester, by deacylation of cellulose triacetate with an alkali metal alkoxide in an alcohol, said alkoxide and said alcohol having from one to three carbon atoms.

2. The composition of Claim 1 wherein said alcohol is methanol and said alkoxide is sodium or potassium methoxide.

3. The composition of Claim 1 wherein said alkoxide is sodium ethoxide, and said alcohol is ethanol.

4. The coating composition of Claim 1 wherein said ester salt is an alkali metal ester salt.

5. The coating composition of Claim 4 wherein said ester salt is a potassium salt.

6. The coating composition of Claim 1 wherein at least about two-thirds of said acyl groups are derived from said aliphatic polycarboxylic acid.

7. The coating composition of Claim 1 having at least 10 acyl groups per $C_{24}$ cellulose unit.

8. The coating composition of Claim 1 wherein said polycarboxylic acid is a dicarboxylic acid.

9. A composite base comprising a support having on at least one side thereof, a conductive and highly-adherent layer composed of:
(a) a hydrophilic binder;
(b) an ester of cellulose having at least 8 acyl groups per $C_{24}$ cellulose unit wherein at least a majority of said acyl groups are derived from an aliphatic polycarboxylic acid having from 3 to 6 carbon atoms; or a salt of said ester, said cellulose characterized by having been derived, prior to preparation of said ester, by deacylation of cellulose triacetate with an alkali metal alkoxide in an alcohol, said alkoxide and said alcohol having from one to three carbon atoms.

10. The composite base of Claim 9 having a hydrophobic support.

11. A composite element comprising a support and on at least one side thereof, a hydrophilic layer, said hydrophilic layer being adhered to said support with a conductive and highly-adherent subbing layer composed of:
(a) a first hydrophilic binder; and
(b) an ester of cellulose having at least 8 acyl groups per $C_{24}$ cellulose unit wherein at least a majority of said acyl groups are derived from an aliphatic polycarboxylic acid having from 3 to 6 carbon atoms; or a salt of said ester, said cellulose characterized by having been derived, prior to preparation of said ester, by deacylation of cellulose triacetate with an alkali metal alkoxide in an alcohol, said alkoxide and said alcohol having from one to three carbon atoms.

12. A photographic element comprising a support and, on at least one side thereof, a photosensitive silver halide emulsion layer which is adhered to said support by a conductive subbing layer, said subbing layer comprising:
(a) a hydrophilic binder,
(b) a water soluble salt of a cellulose ester, said cellulose ester having at least 8 acyl groups per $C_{24}$ cellulose unit wherein at least a majority of said acyl groups are derived from an aliphatic polycarboxylic acid having from 3 to 6 carbon atoms, said cellulose characterized by having been derived, prior to preparation of said ester, by deacylation of cellulose triacetate with an alkali metal oxide in an alcohol, said alkoxide and said alcohol having from one to three carbon atoms.

13. A photographic element of Claim 12 characterized in that the support is a polyester and the hydrophilic binder is gelatin and the water-soluble salt of a cellulose ester is potassium cellulose succinate containing at least 10 succinyl groups per $C_{24}$ cellulose unit.

14. A photographic element of Claim 12 characterized in that the support is a polyester and the water-soluble salt of a cellulose ester is cellulose succinate containing at least 10 succinyl groups per $C_{24}$ cellulose unit.

15. A photographic element of Claim 14 characterized in that the polyester support is poly(ethylene terephthalate).

**Patentansprüche**

1. Wäßrige Beschichtungszusammensetzung, die sich zur Bildung einer leitfähigen und stark haftenden Schicht auf einem Träger eignet, die umfaßt:
(a) ein hydrophiles Bindemittel;
(b) einen Ester der Cellulose mit mindestens 8 Acylgruppen pro $C_{24}$ Celluloseeinheit, wobei mindestens ein Hauptteil der Acylgruppen sich von einer aliphatischen Polycarbonsäure mit 3 bis 6 Kohlenstoffatomen ableitet; oder einem Salz des Esters, wobei die Cellulose gekennzeichnet ist dadurch, daß sie vor der Herstellung des Esters erhalten worden ist durch Deacylierung von Cellulosetriacetat mit einem Alkalimetallalkoxid in einem Alkohol, wobei das Alkoxid und der Alkohol 1 bis 3 Kohlenstoffatome aufweisen.

2. Zusammensetzung nach Anspruch 1, in der der Alkohol Methanol ist und das Alkoxid Natrium- oder Kaliummethoxid.

3. Zusammensetzung nach Anspruch 1, in der das Alkoxid Natriumethoxid ist und der Alkohol Ethanol.

4. Beschichtungszusammensetzung nach Anspruch 1, in der das Estersalz ein Alkalimetallestersalz ist.

5. Beschichtungszusammensetzung nach Anspruch 4, in der das Estersalz ein Kaliumsalz ist.

6. Beschichtungszusammensetzung nach Anspruch 1, in der mindestens etwa zwei Drittel der Acylgruppen sich von der aliphatischen Polycarbonsäure ableiten.

7. Beschichtungszusammensetzung nach Anspruch 1, mit mindestens 10 Acylgruppen pro $C_{24}$-Celluloseeinheit.

8. Beschichtungszusammensetzung nach Anspruch 1, in der die Polycarbonsäure eine Dicarbonsäure ist.

9. Verbundträger mit einem Träger, der auf mindestens einer Seite eine leitfähige und stark haftende Schicht aufweist aus:
(a) einem hydrophilen Bindemittel;
(b) einem Ester der Cellulose mit mindestens 8 Acylgruppen pro $C_{24}$-Celluloseeinheit, wobei mindestens ein Hauptteil der Acylgruppen sich von einer aliphatischen Polycarbonsäure mit 3 bis 6 Kohlenstoffatomen ableitet; oder einem Salz des Esters, wobei die Cellulose gekennzeichnet ist dadurch, daß sie vor der Herstellung des Esters erhalten worden ist durch Deacylierung von Cellulosetriacetat mit einem Alkalimetallalkoxid in einem Alkohol, wobei das Alkoxid und der Alkohol 1 bis 3 Kohlenstoffatome aufweisen.

10. Verbundträger nach Anspruch 9 mit einem hydrophoben Träger.

11. Verbundelement mit einem Träger, der auf mindestens einer Seite eine hydrophile Schicht aufweist, wobei die hydrophile Schicht an dem Träger mittels einer leitfähigen und stark haftenden die Haftung verbessernden Schicht zur Haftung gebracht wird, die zusammengesetzt ist aus:
(a) einem ersten hydrophilen Bindemittel; und
(b) einem Ester der Cellulose mit mindestens 8 Acylgruppen pro $C_{24}$-Celluloseeinheit, wobei mindestens ein Hauptteil der Acylgruppen sich von einer aliphatischen Polycarbonsäure mit 3 bis 6 Kohlenstoffatomen ableitet; oder einem Salz des Esters, wobei die Cellulose gekennzeichnet ist dadurch, daß sie vor der Herstellung des Esters erhalten worden ist durch Deacylierung von Cellulosetriacetat mit einem Alkalimetallalkoxid in einem Alkohol, wobei das Alkoxid und der Alkohol 1 bis 3 Kohlenstoffatome aufweisen.

12. Photographisches Element mit einem Träger, der auf mindestens einer Seite eine photosensitive Silberhalogenidemulsionsschicht aufweist, die an dem Träger zur Haftung gebracht ist durch eine leitfähige die Haftung verbessernde Schicht, wobei diese die Haftung verbessernde Schicht umfaßt:
(a) ein hydrophiles Bindemittel,
(b) ein wasserlösliches Salz eines Celluloseesters, wobei der Celluloseester mindestens 8 Acylgruppen pro $C_{24}$-Celluloseeinheit aufweist, wobei mindestens ein Hauptteil der Acylgruppen sich von einer aliphatischen Polycarbonsäure mit 3 bis 6 Kohlenstoffatomen ableitet, und wobei die Cellulose dadurch

gekennzeichnet ist, daß sie vor Herstellung des Esters erhalten wurde durch Deacylierung von Cellulosetriacetat mit einem Alkalimetalloxid in einem Alkohol, wobei das Alkoxid und der Alkohol 1 bis 3 Kohlenstoffatome aufweisen.

**13.** Photographisches Element nach Anspruch 12, dadurch gekennzeichnet, daß der Träger ein Polyesterträger ist und das hydrophile Bindemittel Gelatine ist, und das wasserlösliche Salz eines Celluloseesters Kaliumcellulosesuccinat mit mindestens 10 Succinylgruppen pro $C_{24}$-Celluloseeinheit ist.

**14.** Photographisches Element nach Anspruch 12, dadurch gekennzeichnet, daß der Träger ein Polyesterträger ist und das wasserlösliche Salz eines Celluloseesters Cellulosesuccinat ist mit mindestens 10 Succinylgruppen pro $C_{24}$-Celluloseeinheit.

**15.** Photographisches Element nach Anspruch 14, dadurch gekennzeichnet, daß der Polyesterträger ein Poly(ethylenterephthalat)träger ist.

## Revendications

**1.** Composition de revêtement aqueuse qui est apte à former une couche conductrice et très adhésive sur un support, ladite composition de revêtement comprenant :

(a) un liant hydrophile,

(b) un ester de cellulose ayant au moins 8 groupes acyle par unité de cellulose en $C_{24}$ dans lequel au moins une majorité desdits groupes acyle sont issus d'un acide polycarboxylique aliphatique ayant de 3 à 6 atomes de carbone, ou un sel dudit ester, ladite cellulose est caractérisée en ce qu'elle est obtenue, avant la préparation dudit ester, par désacylation du triacétate de cellulose avec un alcoxyde métallique alcalin dans un alcool, ledit alcoxyde et ledit alcool ayant de 1 à 3 atomes de carbone.

**2.** Composition selon la revendication 1, dans laquelle ledit alcool est du méthanol et ledit alcoxyde est le méthoxyde de sodium ou de potassium.

**3.** Composition selon la revendication 1, dans laquelle ledit alcoxyde est l'éthoxyde de sodium et ledit alcool est l'éthanol.

**4.** Composition de revêtement selon la revendication 1, dans laquelle ledit sel d'ester est un sel d'ester métallique alcalin.

**5.** Composition de revêtement selon la revendication 4, dans laquelle ledit sel d'ester est un sel de potassium.

**6.** Composition de revêtement selon la revendication 1, dans laquelle au moins environ deux tiers desdits groupes acyle sont issus dudit acide polycarboxylique aliphatique.

**7.** Composition de revêtement selon la revendication 1, ayant au moins 10 groupes acyle par unité de cellulose en $C_{24}$.

**8.** Composition de revêtement selon la revendication 1, dans laquelle ledit acide polycarboxylique est un acide dicarboxylique.

**9.** Base composite comprenant un support muni sur au moins l'un de ses côtés d'une couche conductrice très adhésive constituée de :

(a) un liant hydrophile,

(b) un ester de cellulose ayant au moins 8 groupes acyle par unité de cellulose en $C_{24}$ dans lequel au moins une majorité desdits groupes acyle sont issus d'un acide polycarboxylique aliphatique ayant de 3 à 6 atomes de carbone, ou un sel dudit ester, ladite cellulose est caractérisée en ce qu'elle est obtenue, avant la préparation dudit ester, par désacylation du triacétate de cellulose avec un alcoxyde métallique alcalin dans un alcool, ledit alcoxyde et ledit alcool ayant de 1 à 3 atomes de carbone.

**10.** Base composite selon la revendication 9, ayant un support hydrophobe.

**11.** Elément composite comprenant un support et muni sur au moins l'un de ses côtés d'une couche hydrophile, ladite couche hydrophile étant collée audit support par une couche substratante conductrice et très adhésive constituée de :

(a) un premier liant hydrophile, et

(b) un ester de cellulose ayant au moins 8 groupes acyle par unité de cellulose en $C_{24}$ dans lequel au moins une majorité desdits groupes acyle sont issus d'un acide polycarboxylique aliphatique ayant de 3 à 6 atomes de carbone, ou un sel dudit ester, ladite cellulose est caractérisée en ce qu'elle est obtenue, avant la préparation dudit ester, par désacylation du triacétate de cellulose avec un alcoxyde métallique alcalin dans un alcool, ledit alcoxyde et ledit alcool ayant de 1 à 3 atomes de carbone.

**12.** Elément photographique comprenant un support et sur au moins l'un de ses côtés, une couche d'émulsion à base d'halogénure d'argent photosensible qui est collée audit support par une couche substratante conductrice, ladite couche substratante comprenant :

(a) un liant hydrophile,

(b) un ester de cellulose ayant au moins 8 groupes acyle par unité de cellulose en $C_{24}$ dans lequel au moins une majorité desdits groupes acyle sont issus d'un acide polycarboxylique aliphatique ayant de 3 à 6 atomes de carbone, ou un sel dudit ester, ladite cellulose est caractérisée en ce qu'elle est obtenue, avant la préparation dudit ester, par désacylation du triacétate de cellulose avec un alcoxyde métallique alcalin dans un alcool, ledit alcoxyde et ledit alcool ayant de 1 à 3 atomes de carbone.

**13.** Elément photographique selon la revendication 12, caractérisé en ce que le support est un polyester et le liant hydrophile est de la gélatine et le sel d'un ester de cellulose soluble dans l'eau est le succinate de cellulose de potassium contenant au moins 10 groupes succinyle par unité de cellulose en $C_{24}$.

**14.** Elément photographique selon la revendication 12, caractérisé en ce que le support est un polyester et le sel d'un ester de cellulose soluble dans l'eau est le succinate de cellulose contenant au moins 10 groupes succinyle par unité de cellulose en $C_{24}$.

**15.** Elément photographique selon la revendication 14, caractérisé en ce que le support de polyester est du téréphtalate de polyéthylène.